# EUROPÄISCHE PATENTSCHRIFT

(11) **EP 3 111 208 B1**
(45) Veröffentlichungstag und Bekanntmachung des Hinweises auf die Patenterteilung: **04.11.2020**
(21) Anmeldenummer: 15707316.4
(22) Anmeldetag: 23.02.2015
(51) Int. Cl.: G01N 29/11, G01N 29/26, G01N 29/265

(54) **VERFAHREN ZUR PRÜFUNG EINES WERKSTÜCKS MITTELS ULTRASCHALL**
METHOD FOR TESTING A WORKPIECE USING ULTRASOUND
PROCÉDÉ DE CONTRÔLE D'UNE PIÈCE AU MOYEN D'ULTRASONS

(30) Priorität: 24.02.2014 DE 102014102374
(43) Veröffentlichungstag der Anmeldung: 04.01.2017
(73) Patentinhaber: Framatome GmbH, 91052 Erlangen (DE)
(72) Erfinder: KÖBER, Felix, 91054 Erlangen (DE); SCHOLZ, Kerstin, 26100 Rauma (FI); ZAUS, Edgar, 90768 Fürth (DE)
(74) Vertreter: Lavoix
(86) Internationale Anmeldenummer: PCT/EP2015/053699
(87) Internationale Veröffentlichungsnummer: WO 2015/124762

(56) Entgegenhaltungen:
- EP-A1- 1 830 185

## Beschreibung

Die Erfindung betrifft ein Verfahren zur Prüfung eines Werkstücks mittels Ultraschall in einem gekrümmten Bereich seiner Oberfläche.

Aus EP 1830185 A1 ist ein Verfahren zur Ultraschallprüfung eines Werksstückes mit gekrümmtem Bereich bekannt. Hierzu wird ein Ultraschallprüfkopf mit mehreren Wandlerelementen verwendet, die zeitversetzt angesteuert werden, so dass Echosignale aus unterschiedlichen Richtungen empfangen werden.

Insbesondere Werkstücke, die aus Faserverbundwerkstoffen wie z.B. glasfaserverstärkten oder kohlefaserverstärkten Kunststoffen (GFK bzw. CFK) hergestellt sind, können bedingt durch das jeweils gewählte Herstellungsverfahren oder nach deren Einsatz Materialfehler aufweisen. Dies stellt insbesondere bei mechanisch hoch beanspruchten und sicherheitsrelevanten Bauteilen ein erhebliches Problem dar. Eine Überprüfung derartiger Materialien erfolgt zerstörungsfrei mittels Ultraschallprüftechniken, insbesondere mit einer kontaktlosen Prüfung, wobei ein ein Ultraschallsignal erzeugender Ultraschallwandler nicht in unmittelbarem Kontakt mit dem Werkstück steht. Vielmehr wird der Ultraschall beispielsweise über eine Flüssigkeitsstrecke in das Werkstück eingekoppelt. Kontaktlose Prüfverfahren haben unter anderem den Vorteil, dass sie eine optimale Prüfabdeckung ermöglichen. Nachteilig ist jedoch, dass der Ultraschallwandler hinsichtlich des Werkstücks exakt positioniert werden muss, um ein aussagekräftiges Mess- bzw. Prüfergebnis zu erhalten. Da jedoch die Werkstücke selbst als auch die verwendeten Ultraschallwandler bzw. Ultraschallwandleranordnungen gewissen mechanischen Positionierungsungenauigkeiten unterliegen, kann es besonders bei Werkstücken mit Bereichen mit gekrümmter Oberfläche auch zu Messungen kommen, anhand derer keine endgültige Aussage hinsichtlich der Beschaffenheit des Werkstücks getroffen werden kann. Es muss dann eine erneute Prüfung des Werkstücks mit korrigierten Positionen von Ultraschallwandler relativ zum Werkstück durchgeführt werden.

Es ist daher Aufgabe der vorliegenden Erfindung ein Verfahren anzugeben, mit dem die genannten Nachteile vermieden werden.

Diese Aufgabe wird erfindungsgemäß gelöst durch ein Verfahren mit den Merkmalen des Patentanspruches 1. Demnach umfasst das Verfahren zur Prüfung eines Werkstücks mittels Ultraschall in einem gekrümmten Bereich seiner Oberfläche die folgenden Schritte:
In Schritt (a) werden mit Hilfe von mindestens einem Ultraschallwandler aus mehreren Sendepositionen mehrere Ultraschallsignale unter unterschiedlichen, in einem Schwenkbereich liegenden Schwenkwinkeln ausgesendet und in das Werkstück eingekoppelt. Unter dem Schwenkwinkel ist derjenige Winkel zu verstehen, der zwischen dem Lot auf die Oberfläche des Ultraschallwandlers und der Ausbreitungsrichtung des Ultraschallsignals eingeschlossen wird.
In Schritt (b) wird zu jedem Ultraschallsignal ein korrespondierendes Ultraschallechosignal empfangen und die Amplitude des beim Eintritt in das Werkstück oder an der Rückwand des Werkstücks erzeugten Ultraschallechos ermittelt. Jedes Ultraschallechosignal umfasst somit sämtliche empfangenen Ultraschallechos, die durch die Reflexion des korrespondierenden ausgesendeten Ultraschallsignals beispielsweise bei dessen Eintritt in das Werkstück, an der Rückwand des Werkstücks oder auch durch Materialfehler erzeugt werden.
In Schritt (c) werden für jede Sendeposition die Ultraschallechos mit lokale Maxima darstellenden Amplituden ermittelt und deren Ultraschallechosignale ausgewählt. Es werden also die in Schritt (b) ermittelten Amplituden sämtlicher Ultraschallechosignale über den gesamten Schwenkbereich gesehen, einer quantitativen Bewertung unterzogen. Dabei werden die Ultraschallechos ermittelt, die gegenüber den weiteren Amplituden ein lokales Maximum darstellen. Daher kann es passieren, dass für eine oder mehrere Sendepositionen mehrere lokale Maxima existieren. Es werden dann aus der Mehrzahl der Ultraschallechosignale diejenigen ermittelt, die ein Ultraschallecho mit einer ein lokales Maximum darstellenden Amplitude aufweisen, wobei folglich auch hierbei mehrere Ultraschallechosignale bei einer oder mehreren Sendepositionen ausgewählt werden können. Sollten aufgrund von z.B. Übersteuerung mehrere benachbarte Ultraschallechosignale einer Sendeposition den gleichen maximalen Amplitudenwert an der Obergrenze des Dynamikbereichs aufweisen, wird stets das Ultraschallechosignal ausgewählt, dessen Schwenkwinkel die geringste Abweichung vom ganzzahligen Mittelwert der Schwenkwinkel der betroffenen Ultraschallechosignale besitzt.

Danach wird in Schritt (d1), sofern in Schritt (c) für eine Sendeposition ein einzelnes Ultraschallecho mit einer ein lokales Maximum darstellenden Amplitude ermittelt wurde, dessen Ultraschallechosignal ausgewählt.

Sofern in Schritt (c) für eine Sendeposition mehrere Ultraschallechos mit einer ein lokales Maximum darstellenden Amplitude ermittelt wurde oder sofern dies für eine Sendeposition vordefiniert ist, erfolgt in Schritt (d2) eine Auswahl von Ultraschallechosignalen, sofern für eine benachbarte Sendeposition in Schritt (c) nur ein einzelnes Ultraschallecho mit einer ein lokales Maximum darstellenden Amplitude ermittelt wurde, indem diejenigen Ultraschallechosignale ausgewählt werden, die in einem bestimmten Winkelbereich um den entsprechenden Schwenkwinkel des Ultraschallechosignals mit der maximalen Amplitude des Ultraschallechos der benachbarten Sendeposition liegen und die ein Ultraschallecho mit maximaler Amplitude aufweisen. Die Durchführung von Schritt (d2) erfolgt also dann, wenn in Schritt (c) kein eindeutiges Ergebnis hinsichtlich eines Ultraschallechos mit maximaler Amplitude ermittelt worden ist, oder wenn dies von vornherein so festgelegt worden ist. Letzteres kann beispielsweise dann erfolgen, wenn bereits bestimmte Bedingungen bekannt sind und man daher eine folgende Auswahl von Ultraschallechosignalen auf einen bekannten Winkelbereich einschränken kann. Es erfolgt dann zusätzlich eine Auswahl anhand von geometrischen Gesichtspunkten in Bezug auf ausgewählte Ultraschallechosignale eines oder mehrerer benachbarter Sendepositionen. Dabei wird also der Schwenkwinkel des ausgewählten Ultraschallechosignals auf die betrachtete Sendeposition übertragen und um einen bestimmten Winkelbereich erweitert. Es wird dann das Ultraschallechosignal ausgewählt, das innerhalb des Winkelbereichs die maximale Amplitude aufweist. Sollten aufgrund von z.B. Übersteuerung mehrere benachbarte Ultraschallechosignale einer Sendeposition innerhalb des Winkelbereichs den gleichen maximalen Amplitudenwert an der Obergrenze des Dynamikbereichs aufweisen, wird stets das Ultraschallechosignal ausgewählt, dessen Schwenkwinkel die geringste Abweichung vom ganzzahligen Mittelwert der Schwenkwinkel der betroffenen Ultraschallechosignale besitzt.

In Schritt (e) erfolgt dann eine Auswertung zumindest der ausgewählten Ultraschallechosignale. Die ausgewählten Ultraschallechosignale stellen somit eine Basis für das weitere Auswerteverfahren und somit für die Bewertung der Materialqualität des Werkstücks dar. Die übrigen Ultraschallechosignale können im Extremfall verworfen werden. Es können aber auch weitere Ultraschallechosignale in die weitere Auswertung einbezogen werden.

Die Erfindung beruht auf der Erkenntnis, dass die Amplitude des Ultraschallechos beim Eintritt in das Werkstück dann maximal und für die Auswertung ideal ist, wenn die in Ausbreitungsrichtung des Ultraschallsignals weisende Einschallachse lotrecht auf der Tangente der Oberfläche des Werkstücks im Schalleintrittspunkt orientiert ist. In diesem Zustand wird nämlich der reflektierte Ultraschall, also das beim Eintritt in das Werkstück erzeugte Ultraschallecho mit der geringsten Ablenkung zur Ultraschallquelle, also zum Ultraschallwandler reflektiert.

Durch die Erfassung mehrerer Ultraschallechosignale, die auf Einschallungen mehrerer Ultraschallsignale unter unterschiedlichen, in einem Schwenkbereich liegenden Schwenkwinkeln basieren, einer anschließenden Ermittlung und Bewertung der Amplituden der Ultraschallechos, welche beim Eintritt in das Werkstück bzw. durch die Rückwand des Werkstücks hervorgerufen werden und durch die erfindungsgemäße Auswahl der idealen Ultraschallechosignale ist es möglich, mittels der Auswertung zumindest dieser ausgewählten Ultraschallechosignale nahezu unabhängig von der Positionierung des Ultraschallwandlers eine gültige Prüfaussage zu erhalten.

Dabei werden aus der Mehrzahl der verschiedenen Ultraschallechosignale nur diejenigen ausgewählt, für die man ein lokales maximales Ultraschallechosignal beim Eintritt in das Werkstück oder von der Rückwand des Werkstücks erhält. Werden in Schritt (c) für eine Sendeposition mehrere Ultraschallechos mit einer ein lokales Maximum darstellenden Amplitude ermittelt, so erfolgt für diese Sendeposition eine Auswahl anhand eines Nachbarschaftskriteriums. Dabei wird sich an denjenigen in Schritt (c) ausgewählten Echosignalen orientiert, welche bereits für eine benachbarte Sendeposition ermittelt worden sind. Es wird dann um das Ultraschallsignal bzw. Ultraschallechosignal ein bestimmter Winkelbereich definiert, in dem das günstigste Ultraschallechosignal zu liegen hat und nur dieses ausgewählt.

Der Vorteil dieses Verfahrens liegt darin, dass verschiedene Einschallungen aus vorher fest definierten Sendepositionen unter verschiedenen Schwenkwinkeln mit nur einem einzigen Prüfdurchgang erfolgen. Es ist keine erneute Positionierung der Ultraschallwandler erforderlich, so dass der Prüfaufwand verringert wird. Das Verfahren lässt große Fehlpositionierungstoleranzen bezüglich Werkstück und Ultraschallwandler zu, da durch das Auswählen der geeigneten Ultraschallechosignale zumindest diejenigen bei der Auswertung betrachtet werden, bei denen ein ideales Ultraschallechosignal vorliegt.

Bei einer bevorzugten Ausführungsform der Erfindung wird ein einzelner Ultraschallwandler in die mehreren Sendepositionen bewegt. Es kann aber auch eine Anordnung von mehreren Ultraschallwandlern verwendet werden, so dass eine Veränderung der Positionierung des einzelnen Ultraschallwandlers während der Werkstückprüfung nicht erforderlich ist. Durch eine feste geometrische Anordnung der mehreren Ultraschallwandler werden durch die Positionierung der gesamten Anordnung relativ zum Werkstück auch gleichzeitig die einzelnen Sendepositionen definiert.

Eine derartige Anordnung kann mindestens einen Phased-Array-Ultraschallwandler umfassen. Eine Änderung des Schwenkwinkels für eine Sendeposition kann hierbei auf elektronischem Wege erfolgen. Es muss dann nicht der Ultraschallwandler physikalisch um eine Schwenkachse geschwenkt werden. Damit kann der Ultraschallwandler noch kompakter ausgeführt sein, da kein Platz für mechanische Verstellmechanismen benötigt wird. Die Prüfbarkeit bzw. Prüfabdeckung schwer zugänglicher Werkstücke wird damit verbessert. Die Prüfdauer kann ebenfalls verkürzt werden, da ein physikalisches Schwenken in z.B. einer Flüssigkeit mehr Zeit in Anspruch nimmt, als ein elektronisches Schwenken.

Bevorzugt zum Prüfen von Innenradien des Werkstücks wird eine Anordnung verwendet, deren zum Werkstück weisende Oberfläche konkav gekrümmt ist. Hierbei kann die Anordnung kompakter aufgebaut werden verglichen mit einer Anordnung mit ebener Oberfläche.

Bevorzugterweise werden in Schritt (a) die Ultraschallsignale jeweils nacheinander ausgesendet.

Bei einer weiteren bevorzugten Ausführungsform der Erfindung erfolgt die Ultraschallprüfung des Werkstücks kontaktlos. Beispielsweise erfolgt die Prüfung mittels Tauchtechnik, was bedeutet, dass das Werkstück und der bzw. die Ultraschallwandler in eine Flüssigkeit getaucht werden und der Ultraschall vom Ultraschallwandler über diese Flüssigkeitsstrecke in das Werkstück eingekoppelt wird. Dabei besteht hinsichtlich der Einschallung des Ultraschallsignals keine mechanische Verbindung zwischen dem Ultraschallwandler und dem zu prüfenden Werkstück. Es können mit dieser Technik auch schwer zugängliche Bereiche eines Werkstücks geprüft werden. Des Weiteren ist eine genaue Anpassung des Ultraschallwandlers an die Geometrie der Oberfläche nicht erforderlich.

Zur weiteren Erläuterung der Erfindung wird auf die Ausführungsbeispiele der Zeichnungen verwiesen. Es zeigen:
Fig. 1 eine Anordnung von mehreren Ultraschallwandlern und ein Werkstück während der Prüfung mit einem ersten Ultraschallwandler in einer ersten Sendeposition,
Fig. 2 die Anordnung von mehreren Ultraschallwandlern und das Werkstück aus Fig. 1 während einer Prüfung mit einem weiteren Ultraschallwandler in einer weiteren Sendeposition,
Fig. 3 ein Diagramm, bei dem die Amplitude des beim Eintritt in das Werkstück erzeugten Echos in Abhängigkeit des Schwenkwinkels dargestellt ist,
Fig. 4 die Anordnung von mehreren Ultraschallwandlern und das Werkstück mit ausgewählten Ultraschallechosignalen der ersten Sendeposition,
Fig. 5 die Anordnung von mehreren Ultraschallwandlern und das Werkstück mit ausgewählten Ultraschallechosignalen der weiteren Sendeposition,
Fig. 6 die Anordnung von mehreren Ultraschallwandlern und das Werkstück mit in einem Winkelbereich liegenden Ultraschallechosignalen der ersten Sendeposition,
Fig. 7 die Anordnung von mehreren Ultraschallwandlern und das Werkstück mit einem ausgewählten Ultraschallechosignal der ersten Sendeposition.

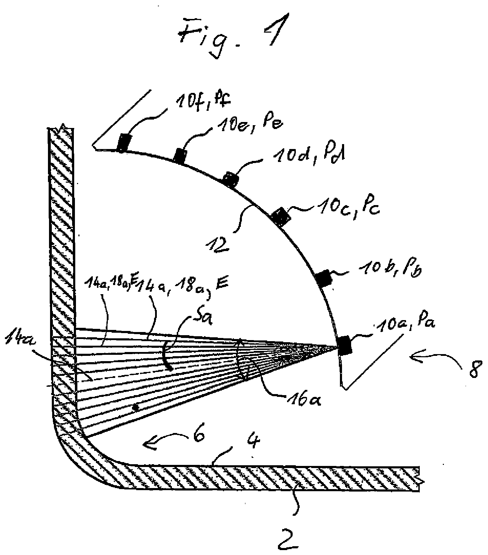

Fig. 1 zeigt ein zu prüfendes Werkstück 2, dessen Oberfläche 4 einen gekrümmten Bereich 6, hier mit einer konkaven Krümmung um einen Winkel von etwa 90°, aufweist. Das Verfahren ist aber auch für andersartig gekrümmte Oberflächen 4 und insbesondere für konkav gekrümmte Oberflächen 4 mit anderen Winkeln geeignet. Die Oberfläche 4 kann auch verschiedene Krümmungen wie konvexe und konkave Krümmungen aufweisen.

Die Prüfung des Werkstücks 2 erfolgt durch Ultraschall mittels Tauchtechnik, wozu das Werkstück 2 in ein nicht gezeigtes Flüssigkeitsbad eingetaucht ist. Des Weiteren zeigt Fig. 1 eine Anordnung 8 von mehreren, in diesem Fall sechs Ultraschallwandlern 10a, b, c, d, e, f, die in einem Prüfkopf integriert sind. Auch diese sind in das Flüssigkeitsbad eingetaucht. Die Ultraschallwandler 10a-f werden jeweils in Phased-Array-Technik betrieben. Die zum Werkstück 2 weisende Oberfläche 12 des Ultraschallprüfkopfes bzw. der Anordnung 8 ist konkav gekrümmt.

Durch die feste geometrische Anordnung der Ultraschallwandler 10a-f innerhalb der Anordnung 8 und einer entsprechenden Positionierung der Anordnung 8 bzw. des Ultraschallprüfkopfes hinsichtlich des Werkstückes 2 werden gleichzeitig die mehreren Sendepositionen Pₐ - P_{f} definiert. Dies bedeutet, dass Ultraschallwandler 10a in der Sendeposition Pₐ, Ultraschallwandler 10b in der Sendeposition P_{b} und die weiteren Ultraschallwandler 10c-f in den entsprechenden Sendepositionen P_{c} - P_{f} positioniert sind.

In einem ersten Schritt (a) werden nun zunächst mit Hilfe des Ultraschallwandlers 10a aus einer Sendeposition Pₐ mehrere Ultraschallsignale 14a unter unterschiedlichen, in einen Schwenkbereich 16a liegenden Schwenkwinkeln Sₐ ausgesendet und in das Werkstück 2 eingekoppelt. Dabei durchlaufen die mehreren Ultraschallsignale 14a eine Flüssigkeit, vorzugsweise Wasser. Der Schwenkbereich 16a umfasst in diesem Fall einen Bereich von insgesamt 24° mit Schwenkwinkeln Sa von -12° bis 12°. Das Ultraschallsignal 14a mit dem Schwenkwinkel von 0° ist gestrichelt eingezeichnet. Die einzelnen Ultraschallsignale 14a werden in diesem Beispiel in einem Abstand von jeweils 2° ausgesendet.

In Schritt (b) wird zu jedem Ultraschallsignal 14a ein korrespondierendes Ultraschallechosignal 18a, in diesem Fall von dem Ultraschallwandler 10a empfangen. Es wäre aber auch möglich, dass das korrespondierende Ultraschallechosignal 18a auch von einem anderen Empfangselement empfangen wird. Das Ultraschallechosignal 18a umfasst dabei mehrere Ultraschallechos E, bspw. ein Ultraschallecho E, das beim Eintritt des Ultraschallsignals in das Werkstück 2 hervorgerufen wird, weitere Ultraschallechos E, die durch Materialfehler des Werkstücks 2 hervorgerufen werden, oder auch ein Ultraschallecho E, welches durch Reflexion des Ultraschallsignals 14a an der Rückwand des Werkstücks 2 hervorgerufen wird. Es wird dann die Amplitude des beim Eintritt in das Werkstück 2 oder an der Rückwand des Werkstücks 2 erzeugten Ultraschallechos E ermittelt.

Im Schritt (c) werden dann zunächst für die Sendeposition Pₐ die Ultraschallechos E mit lokale Maxima darstellenden Amplituden ermittelt und deren Ultraschallechosignale 18a ausgewählt.

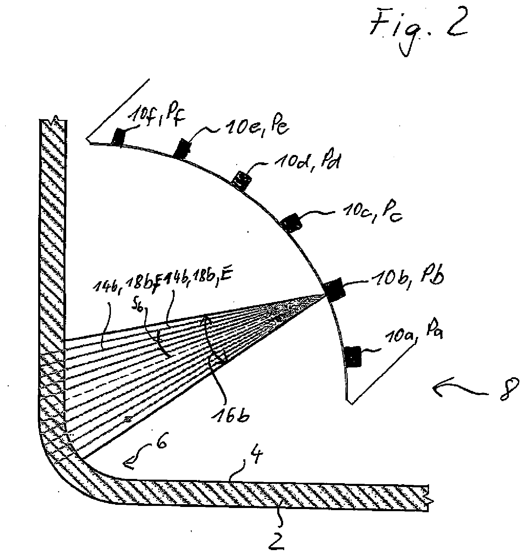

Anschließend erfolgt gemäß Schritt (a) eine weitere Aussendung mehrerer Ultraschallsignale 14b durch den Ultraschallwandler 10b, wobei diese wiederum unter unterschiedlichen, in einem Schwenkbereich 16b liegenden Schwenkwinkeln S_{b} ausgesendet und in das Werkstück 2 eingekoppelt werden. Der Schwenkbereich 16b kann dabei einen gleichen Winkelbereich wie der Schwenkbereich 16a, also in diesem Beispiel 24° umfassen. Er kann jedoch auch davon verschieden sein. Auch die einzelnen Schwenkwinkel S_{b} können den Schwenkwinkeln Sₐ entsprechen, können aber auch von diesen verschieden sein, d.h. der Abstand der Schwenkwinkel S_{b} kann größer oder kleiner als der Abstand der einzelnen Schwenkwinkel Sₐ sein. Es werden dann die Schritte (b) und (c) für die Sendeposition P_{b} entsprechend durchgeführt. Dieser Sachverhalt ist in Fig. 2 näher erläutert. Sämtliche Schritte (a), (b) und (c) werden dann für alle weiteren Sendepositionen S_{c} - S_{f} durchgeführt. Auch hierbei können die einzelnen Parameter wie etwa Schwenkwinkel S_{c} - S_{f} oder Schwenkbereich 16c-f individuell variiert werden.

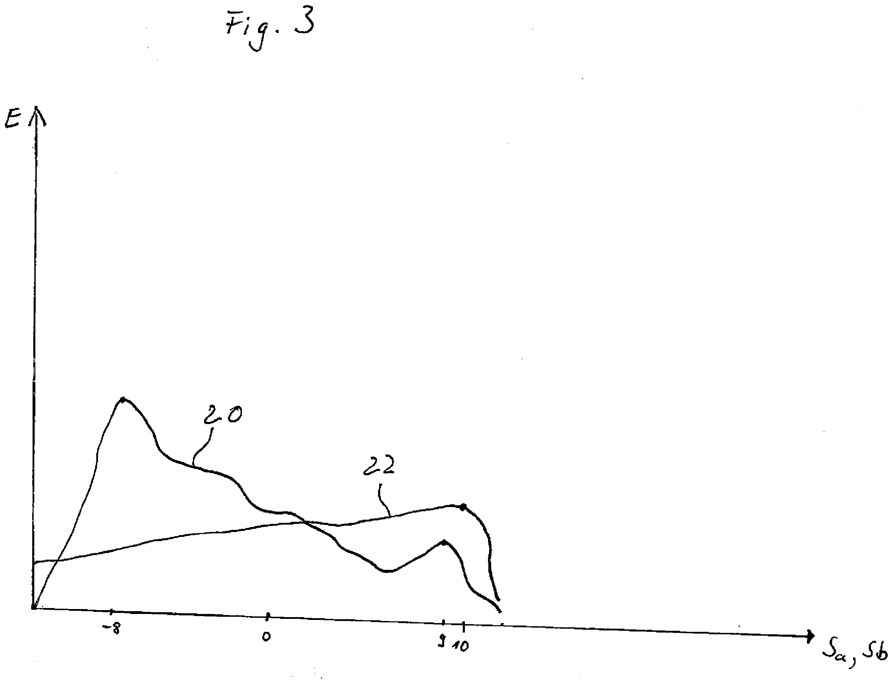

In Fig. 3 ist nun ein Diagramm dargestellt, in dem eine Kurve 20 sowie eine Kurve 22 abgebildet ist. Kurve 20 stellt dabei die Amplituden der Ultraschallechos E, welche beim Eintritt des Ultraschallsignals 14a in das Werkstück 2 erzeugt wurden, der Ultraschallechosignale 18a in Abhängigkeit des Schwenkwinkels Sₐ dar. Analog stellt Kurve 22 die Amplituden der Ultraschallechos E des Ultraschallechosignals 18b dar. Kurve 20 weist zwei lokale Maxima für Schwenkwinkel Sₐ von -8° und +9° auf. Kurve 22 dagegen weist lediglich ein lokales Maximum bei einem Schwenkwinkel S_{b} bei +10° auf. Somit werden gemäß Schritt (c) für die Sendeposition Pₐ mehrere Ultraschallechos E mit lokale Maxima darstellenden Amplituden, nämlich diejenigen zu den korrespondierenden Ultraschallsignalen 18a mit den Schwenkwinkeln Sₐ von -8° und +9°, ermittelt. Für die Sendeposition P_{b} wird einzig das Ultraschallecho E mit einer ein lokales Maximum darstellenden Amplitude ermittelt, welches zu dem Ultraschallechosignal 18b mit dem Schwenkwinkel S_{b} von +10° gehört. Dabei handelt es sich jeweils um diejenigen Ultraschallechosignale 18a, 18b, deren korrespondierende Ultraschallsignale 14a, 14b orthogonal auf die Oberfläche 4 des Werkstücks auftreffen.

Da für die Sendeposition P_{b} nur ein einzelnes Ultraschallecho E mit einer ein lokales Maximum darstellenden Amplitude ermittelt wurde, wird gemäß Schritt (d1) dessen zugehöriges Ultraschallechosignal 18b, also dasjenige mit dem Schwenkwinkel S_{b} von +10° ausgewählt.

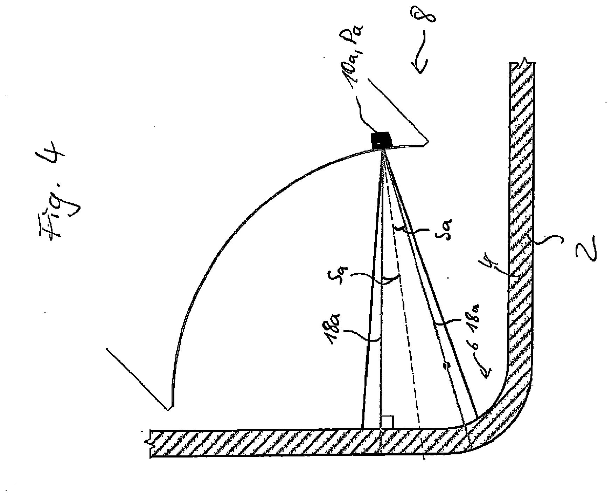

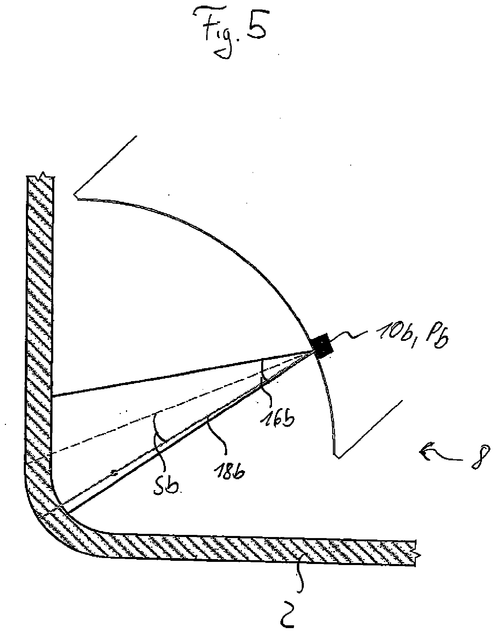

Die ermittelten bzw. ausgewählten Ultraschallechosignale 18a, 18b sind in den Figuren 4 und 5 in Bezug auf die Anordnung 8 und das Werkstück 2 dargestellt. Man erkennt in Fig. 4, dass eines der zu den in Schritt (c) ermittelten Echosignalen E gehörende Ultraschallechosignal 18a in den gekrümmten Bereich 6 der Oberfläche 4 des Werkstücks eingekoppelt wird, während das weitere Ultraschallechosignal 18a oberhalb dieses Bereichs liegt. Für die weitere Auswertung ist jedoch nur das Ultraschallechosignal 18a relevant, welches in den gekrümmten Bereich eingekoppelt wird.

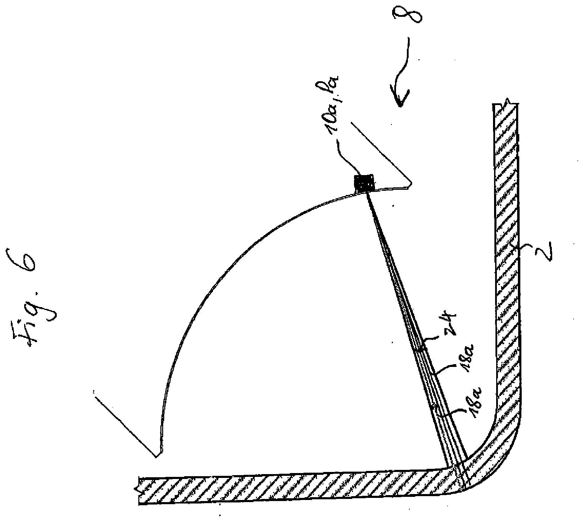

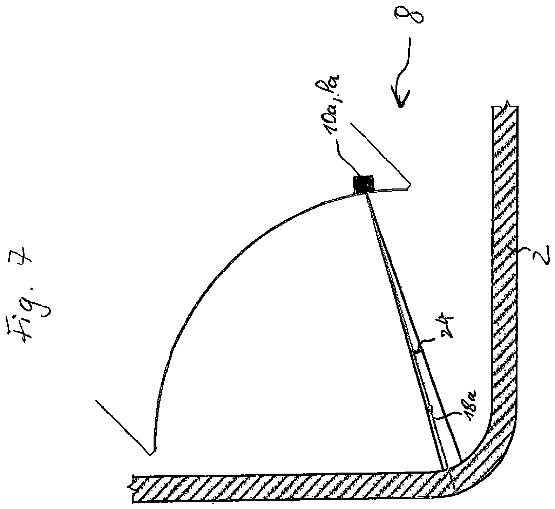

Um nun eine Auswahl des relevanten Ultraschallechosignals 18a durchführen zu können, wird in Schritt (d2) das ausgewählte Ultraschallechosignal 18b der benachbarten Sendeposition P_{b} betrachtet. Es wird nun, wie in Fig. 6 näher erläutert, dasjenige Ultraschallechosignal aus der gesamten Schar aller Ultraschallechosignale 18a ausgewählt, welches in einem bestimmten Winkelbereich 24, hier bspw. +- 2° um den entsprechenden Schwenkwinkel S_{b} des Ultraschallechosignals 18b mit der maximalen Amplitude des Ultraschallechos E der benachbarten Sendeposition Pₐ liegt. Der Schwenkwinkel S_{b} des Ultraschallechosignals 18b mit der maximalen Amplitude des Ultraschallechos E wurde in Schritt (c) bei +10° ermittelt. Der Winkelbereich 24 wurde mit +-2° vorbestimmt. Der relevante Winkelbereich 24 umfasst daher die Schwenkwinkel Sₐ von +10° +-2° also von +8° bis +12°, wie in Fig. 6 dargestellt. In diesem Winkelbereich 24 werden nun alle Ultraschallechosignale 18a betrachtet und dasjenige Ultraschallechosignal 18a ausgewählt, dessen Ultraschallecho E die maximale Amplitude aufweist. In diesem Fall wird das Ultraschallechosignal 18a mit dem Schwenkwinkel Sₐ von +9° ausgewählt. Das Ergebnis dieses Auswahlprozesses ist in Fig. 7 dargestellt.

In diesem Fall wurde lediglich das Ultraschallechosignal 18b mit der maximalen Amplitude des Ultraschallechos E einer benachbarten Sendeposition S_{b} betrachtet. Es können aber im Einzelfall auch mehrere benachbarte Sendepositionen S betrachtet werden, sofern in Schritt (c) Sendepositionen S mit mehreren ausgewählten Ultraschallechosignalen 18a-f ermittelt wurden.

Anschließend erfolgt eine Auswertung zumindest der ausgewählten Ultraschallechosignale 18a-f. Die übrigen Ultraschallechosignale können dagegen verworfen werden.

Mit einer derartigen Vorgehensweise wird also nahezu unabhängig von der Positionierung der Anordnung des Ultraschallprüfkopfes 8 erreicht, dass das Werkstück 2 zunächst mit einer großen Anzahl von Ultraschallsignalen 14 unter verschiedensten geometrischen Bedingungen angeschallt wird und dann die zur Auswertung geeigneten Ultraschallechosignale 18a-f ausgewählt werden.

### Bezugszeichenliste

- 2: Werkstück
- 4: Oberfläche
- 6: gekrümmter Bereich
- 8: Ultraschallprüfkopf
- 10a, b, c, d, e, f: Ultraschallwandler
- 12: Oberfläche
- 14a, b: Ultraschallsignal
- 16a, b: Schwenkbereich
- 18a, b: Ultraschallechosignal
- 20: Kurve
- 22: Kurve
- 24: Winkelbereich

- E: Ultraschallecho
- P_{a, b, c, d, e, f}: Sendeposition
- S_{a, b}: Schwenkwinkel

## Patentansprüche

1. Verfahren zur Prüfung eines Werkstücks (2) mittels Ultraschall in einem gekrümmten Bereich (6) seiner Oberfläche (4) mit folgenden Schritten:
(a) mit Hilfe von mindestens einem Ultraschallwandler (10a-f) werden aus mehreren Sendepositionen (P_{a-f}) mehrere Ultraschallsignale (14a, b) unter unterschiedlichen, in einem Schwenkbereich (16a, b) liegenden Schwenkwinkeln (S_{a, b}) ausgesendet und in das Werkstück (2) eingekoppelt,
(b) zu jedem Ultraschallsignal (14a, b) wird ein korrespondierendes Ultraschallechosignal (18a, b) empfangen und die Amplitude des beim Eintritt in das Werkstück (2) oder an der Rückwand des Werkstücks (2) erzeugten Ultraschallechos (E) ermittelt,
(c) für jede Sendeposition (P_{a-f}) werden die Ultraschallechos (E) mit lokale Maxima darstellenden Amplituden ermittelt, **gekennzeichnet durch** die weiteren Schritte:
(d1) sofern in Schritt (c) für eine Sendeposition (P_{a-f}) ein einzelnes Ultraschallecho (E) mit einer ein lokales Maximum darstellenden Amplitude ermittelt wurde, wird dessen zugehöriges Ultraschallechosignal (18a, b) ausgewählt,
(d2) sofern in Schritt (c) für eine Sendeposition (P_{a-f}) mehrere Ultraschallechos (E) mit einer ein lokales Maximum darstellenden Amplitude ermittelt wurde, erfolgt eine Auswahl von Ultraschallechosignalen (18a, b), sofern für eine benachbarte Sendeposition (P_{a-f}) in Schritt (c) nur ein einzelnes Ultraschallecho (E) mit einer ein lokales Maximum darstellenden Amplitude ermittelt wurde, indem diejenigen Ultraschallechosignale (18a, b) ausgewählt werden, die in einem bestimmten Winkelbereich (24) um den entsprechenden Schwenkwinkel (S_{a,b}) des Ultraschallechosignals (18a, b) mit der maximalen Amplitude des Ultraschallechos (E) der benachbarten Sendeposition (P_{a-f}) liegen und die ein Ultraschallecho (E) mit maximaler Amplitude aufweisen,
(e) es erfolgt eine Auswertung zumindest der ausgewählten Ultraschallechosignale (18a, b).

2. Verfahren nach Anspruch 1, bei dem ein einzelner Ultraschallwandler (10a-f) in die mehreren Sendepositionen (P_{a-f}) bewegt wird.

3. Verfahren nach Anspruch 1, bei dem eine Anordnung (8) von mehreren Ultraschallwandlern (10a-f) verwendet wird.

4. Verfahren nach Anspruch 3, bei dem die Anordnung (8) durch mindestens einen Phased-Array-Ultraschallwandler (10a-f) gebildet wird.

5. Verfahren nach Anspruch 3 oder 4, bei dem eine zum Werkstück (2) weisende Oberfläche (4) der Anordnung (8) konkav gekrümmt ist.

6. Verfahren nach einem der vorhergehenden Ansprüche, bei dem in Schritt (a) die Ultraschallsignale (14a, b) jeweils nacheinander ausgesendet werden.

7. Verfahren nach einem der vorhergehenden Ansprüche, bei dem eine kontaktlose Ultraschallprüfung des Werkstücks (2) erfolgt.

## Claims

1. A method for testing a workpiece (2) using ultrasound in a curved region (6) of the surface (4) of said workpiece having the following steps:
(a) a plurality of ultrasonic signals (14a, b) are emitted from a plurality of transmitting positions (P_{a-f}) at different pivot angles (S_{a, b}) lying in a pivoting range (16a, b) with the aid of at least one ultrasonic transducer (10a-f) and are injected into the workpiece (2),
(b) a corresponding ultrasonic echo signal (18a, b) is received for each ultrasonic signal (14a, b), and the amplitude of the ultrasonic echo (E) produced upon entering the workpiece (2) or on the rear wall of the workpiece (2) is determined,
(c) the ultrasonic echoes (E) having amplitudes representing local maxima are determined for each transmitting position (P_{a-f}), **characterized by** the further steps:
(d1) if a single ultrasonic echo (E) having an amplitude representing a local maximum was determined for a transmitting position (P_{a-f}) in step (c), the associated ultrasonic echo signal (18a, b) of said echo is selected,
(d2) if a plurality of ultrasonic echoes (E) having an amplitude representing a local maximum was determined for a transmitting position (P_{a-f}) in step (c), a selection of ultrasonic echo signals (18a, b) is made, provided only a single ultrasonic echo (E) having an amplitude representing a local maximum was determined for an adjacent transmitting position (P_{a-f}) in step (c), by selecting those ultrasonic echo signals (18a, b) which lie in a particular angle range (24) around the corresponding pivot angle (S_{a, b}) of the ultrasonic echo signal (18a, b) having the maximum amplitude of the ultrasonic echo (E) of the adjacent transmitting position (P_{a-f}) and which have an ultrasonic echo (E) having a maximum amplitude,
(e) an evaluation is carried out of at least the selected ultrasonic echo signals (18a, b).

2. The method according to claim 1, in which a single ultrasonic transducer (10a-f) is moved into said plurality of transmitting positions (P_{a-f}).

3. The method according to claim 1, in which an arrangement (8) of a plurality of ultrasonic transducers (10a-f) is used.

4. The method according to claim 3, in which the arrangement (8) is formed by at least one phased-array ultrasonic transducer (10a-f).

5. The method according to claim 3 or 4, in which a surface (4) of the arrangement (8), facing the workpiece (2) has a concave curvature.

6. The method according to any one of the preceding claims, in which in step (a) the ultrasonic signals (14a, b) are each emitted one after another.

7. The method according to any one of the preceding claims, in which a contactless ultrasonic testing of the workpiece (2) is carried out.

## Revendications

1. Procédé de contrôle d'une pièce (2) au moyen d'ultrasons dans une zone incurvée (6) de sa surface (4), avec les étapes suivantes :
(a) à l'aide d'au moins un transducteur à ultrasons (10a-f), à partir de plusieurs positions d'émission (P_{a-f}), plusieurs signaux ultrasonores (14a,b) sont émis sous différents angles de pivotement (S_{a,b}) se trouvant dans une zone de pivotement (16a,b) et introduits dans la pièce (2),
(b) à chaque signal ultrasonore (14a,b), un signal d'écho ultrasonore (18a,b) correspondant est reçu et l'amplitude de l'écho ultrasonore (E) généré lors de l'entrée dans la pièce (2) ou sur la paroi arrière de la pièce (2) est déterminée,
(c) pour chaque position d'émission (P_{a-f}), les échos ultrasonores (E) avec des amplitudes représentant des maxima locaux sont déterminés, **caractérisé par** les étapes supplémentaires suivantes :
(d1) si, à l'étape (c), pour une position d'émission (P_{a-f}), un seul écho ultrasonore (E) avec une amplitude représentant un maximum local a été déterminé, son signal d'écho ultrasonore (18a,b) correspondant est sélectionné,
(d2) si, à l'étape (c), pour une position d'émission (P_{a-f}), plusieurs échos ultrasonores (E) avec une amplitude représentant un maximum local ont été déterminés, il s'ensuit une sélection de signaux d'échos ultrasonores (18a,b) si, pour une position d'émission (P_{a-f}) voisine, à l'étape (c), un seul écho ultrasonore (E) avec une amplitude représentant un maximum local a été déterminé, en sélectionnant les signaux d'échos ultrasonores (18a,b) qui se trouvent dans une plage angulaire (24) déterminée autour de l'angle de pivotement (S_{a,b}) correspondant du signal d'écho ultrasonore (18a,b) avec l'amplitude maximale de l'écho ultrasonore (E) de la position d'émission (P_{a-f}) voisine et qui présentent un écho ultrasonore (E) avec une amplitude maximale,
(e) une analyse d'au moins les signaux d'échos ultrasonores (18a,b) sélectionnés est effectuée.

2. Procédé selon la revendication 1, dans lequel un seul transducteur à ultrasons (10a-f) est déplacé vers les plusieurs positions d'émissions (P_{a-f}).

3. Procédé selon la revendication 1, dans lequel un arrangement (8) de plusieurs transducteurs à ultrasons (10a-f) est utilisé.

4. Procédé selon la revendication 3, dans lequel l'arrangement (8) est constitué d'au moins un transducteur à ultrasons (10a-f) à commande de phase.

5. Procédé selon la revendication 3 ou 4, dans lequel une surface (4), orientée vers la pièce (2), de l'arrangement (8) est incurvée de manière concave.

6. Procédé selon l'une des revendications précédentes, dans lequel, à l'étape (a), les signaux ultrasonores (14a,b) sont émis les uns après les autres.

7. Procédé selon l'une des revendications précédentes, dans lequel un contrôle de la pièce (2) par ultrasons sans contact est effectué.
